Europäisches Patentamt

European Patent Office

Office européen des brevets

(11) Veröffentlichungsnummer: **0 351 522**
**A1**

(12) # EUROPÄISCHE PATENTANMELDUNG

(21) Anmeldenummer: 89109544.0

(22) Anmeldetag: 26.05.89

(51) Int. Cl.⁴: **B23K 7/00** , **G01B 7/28**

(30) Priorität: 31.05.88 DE 3818400

(43) Veröffentlichungstag der Anmeldung:
**24.01.90 Patentblatt 90/04**

(84) Benannte Vertragsstaaten:
**AT FR GB IT SE**

(71) Anmelder: **Klöckner-Wilhelmsburger GmbH**
**Borsigstrasse 24**
**D-2054 Geesthacht(DE)**

(72) Erfinder: **Flindt, Werner**
**Buchenweg 21**
**D-2054 Geesthacht(DE)**

(74) Vertreter: **Kiefer, Winfried, Dipl.-Phys.**
**Klöckner-Werke Aktiengesellschaft**
**Patentabteilung Klöcknerstrasse 29**
**D-4100 Duisburg 1(DE)**

(54) Verfahren und Vorrichtung zum Bestimmen der Aussenkontur und/oder der Innenkontur von Körpern für das Brennschneiden.

(57) Zum Bestimmen der Außenkontur und/oder Innenkontur von Körpern für das Brennschneiden ihrer gegenseitigen Berührungslinie bzw. gegenseitigen Durchdringungslinie.

Zu dem Körper werden eine Achse und eine Bezugsebene raumfest festgelegt. In der Bezugsebene bzw. in mindestens einer zur Bezugsebene parallelen Ebene von der Achse aus bzw. in Richtung zur Achse werden die Abstände zur Kontur des Körpers zur reproduzierbaren Erfassung der Kontur gemessen.

## Fig.1b

EP 0 351 522 A1

## Verfahren und Vorrichtung zum Bestimmen der Außenkontur und/oder der Innenkontur von Körpern für das Brennschneiden

Die Erfindung betrifft ein Verfahren zum Bestimmen der Außenkontur und/oder der Innenkontur von Körpern, insbesondere von prismatischen Körpern zum Brennschneiden ihrer gegenseitigen Berührungslinie bzw. gegenseitigen Durchdringungslinie für das Brennschneiden.

Im Rahmen der Erfindung sind unter Körpern Bleche mit Bohrungen, Reaktordeckel mit den Bohrungen für Spannschrauben, unter prismatischen Körpern, solche mit einer Achse wie zum Beispiel pyramidenförmige Körper, solche von Zylindergeometrie wie z.B. Großrohre, weiterhin Knoten für Bohrinseln, Druckbehälter für Reaktoren, Klöpperböden z.B. für den Kesselbau und dgl. zu verstehen.

Bisher ist man beim Brennschneiden der Berührungslinien bzw. Durchdringungslinien von mathematischen Körpern (DBP 31 50 971) ausgegangen. So hat man bisher bei Rohren generell einen Kreisquerschnitt vorausgesetzt und im allgemeinen ein erhebliches Nacharbeiten in Kauf genommen, um der Tatsache Rechnung zu tragen, daß in der Praxis Rohre für Erdgasleitungen nicht einmal in erster Näherung einen runden Querschnitt aufweisen.

So fordern beispielsweise die einschlägigen Normen lediglich, daß die Rohre nach Augenmaß gerade sein müssen, d.h., daß implizit weitstreuende Fertigungstoleranzen der Rohre von vornherein hingenommen werden müssen und weiterhin auch der Tatsache, daß es bislang keine reproduzierbaren Meßverfahren gab, um diesen in der Praxis auftretenden Abweichungen von der idealen Geometrie geometrischer Körper hinreichend genau Rechnung zu tragen.

Entsprechendes gilt für große Behälter, Klöpperböden, usw.

Schwierigkeiten ergeben sich auch dadurch, daß bisher auf diesen technischen Gebieten keine reproduzierbaren Meßverfahren bekannt sind. So hat man bisher sich in der Weise beholfen, daß man auch bei sehr großen Abweichungen von kreisrundem Querschnitt bei Rohren mathematisch von Rohren mit konstantem Radius und konstanter Wandstärke ausgegangen ist, um die gegenseitigen Berührungslinien bzw. gegenseitigen Durchdringungslinien der sich berührenden bzw. zu durchdringenden Rohre bestimmen. Es zeigte sich dann in vielen Fällen, daß die Abweichungen von der Rundheit noch nicht einmal in erster Näherung vernachlässigbar waren, da die Durchdringungsbereiche anschließend mit erheblichem Aufwand von Hand nachgebessert werden mußen, damit Schweißnähte gelegt werden konnten, die in erster Näherung in etwa einen konstanten Querschnitt aufweisen, eine Forderung, die auf vielen technischen Gebieten zwar vorgeschrieben doch kaum einzuhalten ist, wie dies beispielsweise auf dem Gebiete der Reaktortechnik bekannt ist.

Entsprechende Probleme ergeben sich auch in der Feinmechanik, einem Gebiet, auf dem bisher im wesentlichen mit Lehren gearbeitet wird, ohne daß ebenfalls befriedigende Verfahren existieren, um beispielsweise genau und reproduhierbar bei hydraulischen Arbeitszylindern die Rundheit und Wandstärke mit hinreichender Exaktheit zu messen.

Unter prismatischen Körpern sind Körper zu verstehen, wie zum Beispiel Rohre von kreisrundem bzw. elliptischem Querschnitt, Kugelkalotten und dgl., weiterhin solche von unrundem Querschnitt, sich konisch verjüngende Körper usw.

Der Erfindung liegt deshalb die Aufgabe zugrunde, ein verfahren der eingangs erwähnten Art zu schaffen, das sowohl bei Körpern von großen Abmessungen (z.B. bei Reaktorgefäßen) als auch z.B. bei Bohrungen in Flanschen von Reaktordeckeln genau und repoduzierbar die Abweichungen von den Abmessungen des idealen Körpers z.B. Unrundheit von Rohren zu bestimmen gestattet, sowie weiterhin eine Vorrichtung zum Durchführen dieses Verfahrens anzugeben.

Diese Aufgabe wird gemäß einem ersten Ausführungsprinzip erfindungsgemäß dadurch gelöst, daß zu dem Körper eine Achse und eine Bezugsebene jeweils raumfest festgelegt werden, in der Bezugsebene bzw. in mindestens einer zu der Bezugsebene parallelen Ebene von der Achse bzw. zur Achse in radialer Richtung die Abstände zur Kontur des Körpers zur reprodzierbaren Erfassung der Körperkontur gemessen werden.

Sim Sinne der Erfindung ist unter Körperkontur die Qußenkntur oder die Innenkontur bzw. die Außen- und Innenkontur zu verstehen, beispielsweise bei einem Großrohr die Innenwandung und/oder die Außenwandung. Hierdurch kann die Unrundheit des Außenmantels und des Innenmantels erfaßt werden, sowie weiterhin, ob die Achsen des Innenmantel und des Außenmantels fluchten, und ebenso die Wandstärke, insbesondere die minimale Wandstärke.

Das Verfahren kann allgemein in der Weise durchgeführt werden, daß in mehreren parallelen Ebenen zur Bezugsebene gemessen wird, so daß sich unter anderem auch in einfacher Weise prüfen läßt, ob beispielsweise die Achse des Rohres geradlinig verläuft bzw. gekrümmt ist. Letzteres ist insbesondere wichtig beim Tieflochbohren von dickwandigen Flanschen, Deckeln mit Spannbolzen, bei denen nicht ohne weiteres ein Einhalten der Achse beim Bohren gewährleistet ist.

Unter einem reproduzierbaren Erfassen der Körperkontur, d.h. der Außenkontur bzw. Innenkontur des Körpers ist zu verstehen, daß bei einer Folge von Messreihen die Fehlerabweichungen üblicherweise einer Gausverteilung entsprechen, was mit den bisherigen Meßverfahren, insbesondere bei ihrer Anwendung bei großdimensionierten Körpern nicht möglich ist. Deshalb wird in bisher sämtlichen Normen für Rohre lediglich gefordert, daß sie "augengerade" sind.

Mit dem erfindungsgemäßen Verfahren wird von einer fest vorgegebenen Achse aus die Länge der Fahrstrahlen in Abhängigkeit des Drehwinkels gemessen (in Polarkoordinaten bzw. Zylinderkoordinaten), diese Längen werden gespeichert und die Abweichungen beispielsweise von der Rundheit eines Rohres mit einem Rechner bestimmt. Entsprechend ist es auch möglich, prismatische Körper von elliptischem Querschnitt zu prüfen, ob die Abweichungen innerhalb einer vorgegebenen Toleranz liegen, was bisher ebenfalls nicht möglich war.

In einer weiteren Ausgestaltung der Erfindung wird für das Brennschneiden von prismatischen Körpern mit den Messwerten den prismatischen Körpern jeweils ein mathematischer prismatischer Körper zugeordnet, mit denen die gegenseitigen Durchdringungslinien bzw. Berührungslinien bestimmt werden. Dieses Verfahren wird beispielsweise durchgeführt beim Herstellen von Rohrknoten für Bohrinseln, wobei dann selbstverständlich das Hauptrohr und das (die Nebenrohre(e) entsprechend zu vermessen sind. Falls die Abweichungen von der vorgegebenen idealen Geometrie - im allgemeinen setzt man eine Zylindergeometrie voraus hinreichend klein ist, ist es ohne weiteres möglich, aus den gemessenen Werten für den Außendurchmesser und Innendurchmesses des Hauptrohres und des Nebenrohres bzw. der Nebenrohre entsprechend mathematisch ein Hauptrohr und die entsprechende Anzahl der Nebenrohre zu definieren und dann mit Rechnern die Berührungs- bzw. Durchdringungslinien zu bestimmen, so daß dann ohne weiteres die Schweißnaht gelegt werden kann. Zur Beurteilung, ob dies in den einzelnen Fällen in der Praxis möglich ist, muß auf die entsprechende Erfahrung zurückgegriffen werden, wobei insbesondere das Verhältnis der Außendurchmesser des Hauptrohres und des bzw. der Nebenrohre die Wandstärken sowie die von den Achsen eingeschlossenen Winkel eine wesentliche Rolle spielen.

In den Fällen, in denen die Abweichungen dies nicht mehr zulassen, wird in einer weiteren Ausgestaltung der Erfindung zum Bestimmen der Durchdringungslinie bzw. der Berührungslinie den realen prismatischen Körpern jeweils ein mathematischer prismatischer Körper mit jeweils mindestens einer effektiven Achse zugeordnet. Unter einer effektiven Achse ist im Rahmen der Erfindung zu verstehen, daß zum Beispiel ein Rohr, das noch annähernd als rund betrachtet werden kann, anhand der Meßwerte eine Achse, die als effektive Achse bezeichnet wird, so bestimmt wird, daß die Abweichungen der Radien von dieser effektiven Achse am geringsten ist. Entsprechend kann anhand der Meßwerte einem Rohr eine Ellipse zugeordnet werden, deren aus den Istwerten bestimmte Achsen im Sinne der Erfindung die effektiven Achsen sind, wobei dann rechnerisch so vorgegangen wird, daß die Quadrate der Abweichungen ein Minimum sind.

Im allgemeinen kann ein stark deformiertes Rohr durch mehrere Ellipsenabschnitte usw. approximiert werden, so daß mehrere effektive Achsen vorgegeben werden. Es ist auch möglich, zur Approximation eine Folge von Korbbögen, Ellipsenbögen Parabelbögen zugrunde zu legen, so daß sich eine Folge von im erfindungsgemäßen Sinne definierten effektiven Achsen ergibt.

Gemäß einem zweiten Ausführungsprinzip wird die Aufgabe für das Verfahren erfindungsgemäß dadurch gelöst, daß zu dem prismatischen Körper eine raumfeste Schnittebene durch den Schnitt einer Geraden mit der Kontur des prismatischen Körpers festgelegt wird, zu dem Streckenabschnitt in der Bezugsebene ein Bezugspunkt vorgegeben wird und von dem Bezugspunkt aus die Abstände zu der Kontur des Körpers gemessen und die tatsächliche Kontur des Körpers bestimmt wird. Unter dem Schnitt der Geraden mit der Kontur ist der Schnitt mit der Außen- bzw. der Innenkontur zu verstehen, falls die Geometrie der Außenwandung bzw. der Innenwandung des Körpers von Interesse ist. In dem Falle, in dem sowohl die Kontur der Innenwandung als auch die Kontur der Außenwandung und gegebenenfalls auch die Wandstärke von be sonderem Interesse sind, wird das Verfahren sowohl für die Innen- als auch für die Außenkontur festgelegt. Durch die Festlegung des Streckenabschnittes sowie des Bezugspunktes, von dem aus die Abstände zu der Kontur (Innenwandung bzw. Außenwandung) des Körpers gemessen werden, wird gewissermaßen nach dem Prinzip der Triangulation verfahren, wobei durch eine Aufbereitung der gemessenen Werte in einem Rechner sich ohne weiteres auf einem Display die geometrische Gestalt des prismatischen Körpers einschließlich der vorgegebenen Toleranzen darstellen läßt.

Die Aufgabe, eine Vorrichtung zur Durchführung des Verfahrens zu schaffen, wird für das Verfahren nach dem ersten Lösungsprinzip dadurch gelöst, daß die Vorrichtung eine Aufnahme bzw. eine Ablageeinrichtung zum raumfesten Anordnen des zu vermessenen prismatischen Körpers und eine in Bezug auf den prismatischen Körper raumfeste Achse rotierbare Einrichtung mit einem Meßkopf zum Messen seiner Abstände von der Kontur des prismatischen Körpers aufweist.

Unter Kontur des prismatischen Körpers ist im Sinne der Erfindung entweder seine Innenwandung und/oder Außenwandung zu verstehen. Durch die rotierende Einrichtung wird die Länge von Fahrstrahlen, d.h. Differenzwerten, die in an sich bekannter Weise in einem Rechner gespeichert werden, abegegriffen und die Darstellung des Körpers auf einem Display anzeigen ohne weiteres ermöglichen.

Diese Aufgabe wird für das Verfahren nach dem zweiten Lösungsprinzip dadurch gelöst, daß die Vorrichtung eine Aufnahme- bzw. Ablageeinrichtung zum raumfesten Anordnen eines zu vermessenden prismatischen Hohlkörpers sowie eine in den prismatischen Hohlkörper einsetzbare bzw. außerhalb anord-bare Einrichtung mit einem um einen in Bezug auf den prismatischen Körper raumfeste Achse rotierbare Einrichtung mit einem Meßkopf zum Messen seiner Abstände von der Innenkontur und/oder Außenkontur des prismatischen Hohlkörpers aufweist. Gemäß diesem zweiten Löungsprinzip wird die Vorrichtung innerhalb des Körpers angeordnet. Um die Außenkontur abzutasten, ist der Meßkopf an dem einen über die zu greifende Außenkontur des Hohlkörpers ragenden Schenkel angeordnet.

Die Erfindung ist in der Zeichnung anhand von Ausführungsbeispielen erläutert.
Es zeigen:
Fig. 1a ein Ausführungsbeispiel eines prismatischen Körpers in perspektivischer Darstellung,
Fig. 1b einen Schnitt durch den prismatischen Körper in Fig. 1,
Fig. 2 ein zweites Ausführungsbeispiel,
Fig. 3 ein drittes Ausführungsbeispiel.

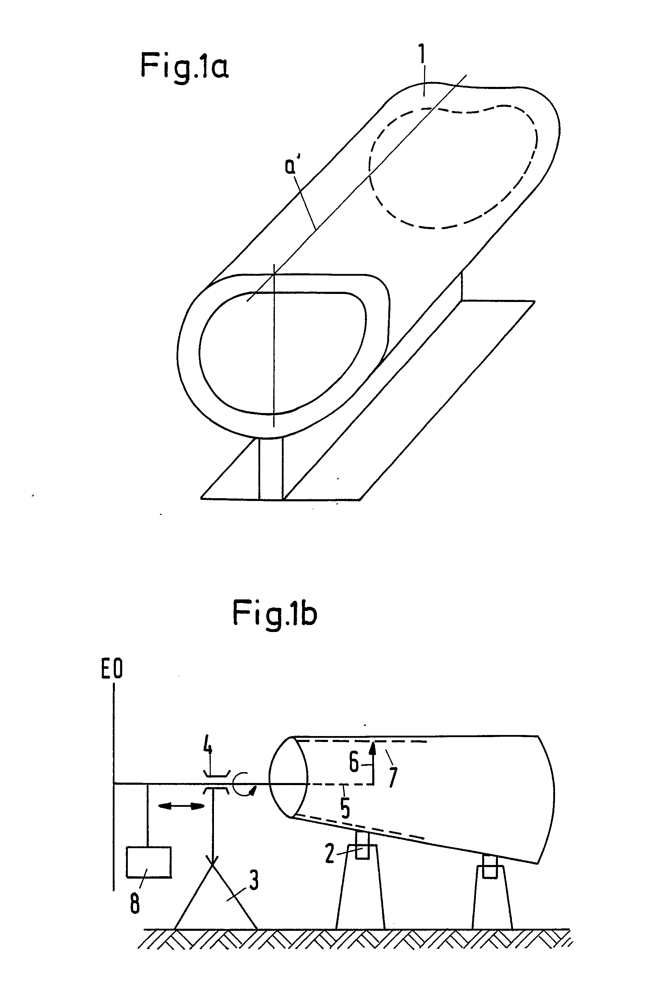

In Fig. 1a ist ein prismatischer Körper, der mit 1 bezeichnet ist, in perspektivischer Ansicht gezeigt. Er ist Näherungsweise ein Rohr, das zu einem Drittel seines Umfangs in einer Fläche a' deformiert ist. Bisher war es nicht möglich, derartige Rohre exakt zu vermessen, um die Durchdringungslinie bzw. Berührungslinie mit einem anderen Rohr (nicht gezeigt) zu bestimmen, so daß anschließend nach dem Brennschneiden mit erheblichem Aufwand ein Nacharbeiten erforderlich war, damit die Schweißnaht gelegt werden konnte.

Fig. 1b zeigt im Schnitt den prismatischen Körper aus Fig. 1a. Er ist in an sich bekannter Weise auf einem Rollenbock 2 angeordnet.

An dem einen stirnseitigen Ende ist auf einem Ständer 3 ein Führungsgehäuse 4 für eine rotierende und in axialer Richtung verschiebbare Welle 5 angeordnet, deren Achse mit einer raumfest vorgegebenen Achse fluchtet, wobei die Bezugsebene Eo eine zu dieser Achse senkrechte Ebene ist. Die Welle weist an ihrem in den prismatischen Körper eintauchenden Endabschnitt einen abgewinkelten Arm 6 mit einem endseitigen Taster 7 auf. Die Abtasteinrichtung kann entweder berührungslos nach dem Ultraschallprinzip arbeiten bzw. ein Stift sein, der in dem Arm teleskopartig geführt ist und bei der Rotation der Welle um ihre Achse auf der Innenwandung des prismatischen Körpers gleitet und den Abständsänderungen ohne weiteres folgen kann.

Die aufgenommenen Werte werden einem Rechner 8 zugeführt, der in an sich bekannter Weise diese aufgenommenen Werte speichert und für den flachen Bereich in Fig. 1a eine Berührungslinie für ein nichtdargestelltes Nebenrohr berechnet.

In entsprechender Weise kann auch dieser Rechner für einen Bereich, der dem Ausschnitt aus einem kreisrunden Rohr entspricht, anhand eines Hohlzylindermodells die Durchdringungslinie bzw. Berührungslinie eines nichtdargestellten Nebenrohres bzw. mehrerer derartiger Nebenrohre bestimmen. Der Algorithmus wird unter Zugrundelegung der analytischen Geometrieb für das Berühren bzw. Durchdringen der Körper abgeleitet.

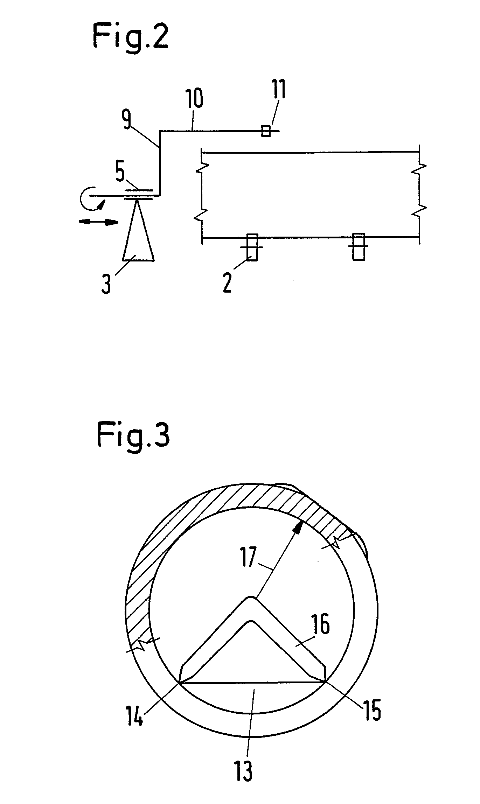

Die Fig. 2 zeigt eine Abwandlung der Vorrichtung in Fig. 1b in der Weise, daß die Außenkontur des prismatischen Körpers bestimmt wird. Zu diesem Zweck weist die Welle außerhalb des Eingriffsbereiches mit dem prismatischen Körper einen L-förmig abgewinkelten Arm 9,10 mit einem Taster 11 auf, der die Außenkontur des Körpers abtastet. Durch taktweisen Vorschub der Welle in den prismatischen Körper kann die gesamte Außenkontur abgetastet werden. Entsprechendes gilt in Fig. 1b für die Außenkontur.

Die Figur 3 zeigt ein weiteres Ausführungsbeispiel einer Vorrichtung für das zweite Meßprinzip anhand eines in erster Näherung einem Rohr entsprechenden hohlen prismatischen Körpers 12. Zu diesem Zwecke wird in dem prismatischen Körper auf die Innenwandung eine Platte 13 mit Schneiden 14, 15 aufgesetzt, wobei der Abstand der Schneiden vorgegeben ist. Oberhalb der Schneiden befindet sich auf einem Abstandshalter 16 eine rotierende Messvorrichtung 17, die beim Rotieren die Abstände der Innenwandung des hohlen prismatischen Körpers von dem Drehpunkt aufnimmt. Aus dem Abstand der beiden Schneiden zueinander, dem Abstand des Drehpunktes von der durch die beiden Schneiden definierten Geraden sowie aus dem jeweiligen Drehwinkel ergibt sich ohne weiteres nach dem Prinzip des Triangulation ein Rechenverfahren zum Bestimmen der Innenkontur des hohlen prismatischen Körpers.

## Ansprüche

1. Verfahren zum Bestimmen der Außenkontur und/oder Innenkontur von Körpern, insbesondere von prismatischen Körpern zum Brennschneiden ihrer gegenseitigen Berührungslinie bzw. gegenseitigen Durchdringungslinie für das Brennschneiden, dadurch gekennzeichnet, daß zu dem Körper eine Achse und eine Bezugsebene jeweils raumfest festgelegt werden, in der Bezugsebene bzw. in mindestens einer zur Bezugsebene parallelen Ebene von der Achse aus bzw. in Richtung zur Achse die Abstände zur Kontur des Körpers zur reproduzierbaren Erfassung der Kontur gemessen werden.

2. Verfahren nach Anspruch 1, dadurch gekennzeichnet, daß zum Bestimmen der Durchdringungslinie bzw. Berührungslinie den realen prismatischen Körpern mit den Meßwerten jeweils ein mathematischer, prismatischer Körper zugeordnet und die gegenseitigen Durchdringungslinien bzw. Berührungslinien berechnet werden.

3. Verfahren nach Anspruch 1 oder 2, dadurch gekennzeichnet, daß zum Bestimmen der Durchdringungslinie bzw. Berührungslinie den realen prismatischen Körpern jeweils ein mathematischer prismatischer Körper mit mindestens einer effektiven Achse zugeordnet wird.

4. Verfahren zum Bestimmen der Außenkontur und/oder Innenkontur von Körpern, insbesondere von prismatischen Körpern zum Brennschneiden Ihrer gegenseitigen Berührungslinie bzw. gegenseitigen Durchdringungslinie für das Brennschneiden, dadurch gekennzeichnet, daß zu dem prismatischen Körper eine raumfeste Schnittebene vorgegeben wird, in der Schnittebene ein Streckenabschnitt durch den Schnitt einer Geraden mit der Kontur des prismatischen Körpers festgelegt wird, zu dem Streckenabschnitt in der Bezugsebene ein Bezugspunkt vorgegeben wird und von dem Bezugspunkt aus die Abstände von und/oder zu der Kontur des Körpers gemessen und mit den gemessenen Werten die tatsächliche Kontur des Körpers bestimmt wird.

5. Vorrichtung zum Durchführen des Verfahrens nach einem der Ansprüche 1 bis 3, dadurch gekennzeichnet, daß die Vorrichtung eine Aufnahme- bzw. Ablageeinrichtung ( 2 ) zum raumfesten Anordnen des zu vermessenen prismatischen Körpers ( 1 ) und einen um eine in bezug auf den prismatischen Körper raumfeste Achse rotierbare Einrichtung (3, 5 , 9 ,10) mit einem Meßkopf ( 11 ) zum Messen seiner Abstände von der Kontur des prismatischen Körpers aufweist.

6. Vorrichtung zum Durchführen des Verfahrens nach einem der Ansprüche 1 bis 3, dadurch gekennzeichnet, daß die Vorrichtung eine Aufnahme bzw. Ablageeinrichtung zum raumfesten Anordnen eines zu vermessenen prismatischen Körpers (12) sowie eine in den prismatischen Hohlkörper einsetzbare bzw. außerhalb anordbare Einrichtung (13, 17,19) mit einen um eine in bezug auf den prismatischen Körper raumfeste Achse rotierbare Einrichtung mit einem Meßkopf (15,16) zum Messen seiner Abstände von der Innenkontur und/oder Außenkontur des prismatischen Hohlkörpers aufweist.

Fig.1a

Fig.1b

# Fig.2

# Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 379 348 (M. BASSO et al.)<br>* Seite 1, Zeilen 1-23; Seite 2, Zeile 39 - Seite 3, Zeile 40; Ansprüche 1,9,10; Figuren 1,2,4 * | 1-4 | B 23 K 7/00<br>G 01 B 7/28 |
| X | --- | 5,6 | |
| Y | DE-A-2 537 328 (THE RANK ORGANISATION LTD.)<br>* Seite 6, Zeile 17 - Seite 7, Zeile 23; Seite 3, Zeile 12 - Seite 10, Zeile 8; Seite 12, Zeile 22 - Seite 15, Zeile 28; Figuren 1,2,5-7 * | 1-3 | |
| X | --- | 5,6 | |
| Y | EP-A-0 169 368 (SIEMENS AG)<br>* Seite 1, Zeile 29 - Seite 4, Zeile 4; Seite 5, Zeilen 7-22; Seite 6, Zeile 6 - Seite 9, Zeile 25; Seite 11, Zeile 20 - Seite 13, Zeile 16; Figuren 1-4,6 * | 1-3 | |
| X | --- | 5,6 | RECHERCHIERTE SACHGEBIETE (Int. Cl.5) |
| Y | GB-A-2 186 370 (RANK TAYLOR HOBSON LTD.)<br>* Zusammenfassung; Seite 1, Zeilen 5-11; Seite 2, Zeilen 4-19; Seite 3, Zeilen 21-29; Figur 1 *<br>--- | 4 | B 23 K 7/00<br>G 01 B 5/00<br>G 01 B 7/00<br>G 01 B 11/00 |
| A | DE-A-2 534 491 (GEWERKSCHAFT EISENHUETTE WESTFALIA)<br>* Seite 2, Zeilen 16-25; Seite 5, Zeilen 10-24; Figur 1 *<br>----- | 4 | |

Der vorliegende Recherchenbericht wurde für alle Patentansprüche erstellt

| Recherchenort | Abschlußdatum der Recherche | Prüfer |
|---|---|---|
| BERLIN | 15-09-1989 | BEITNER M.J.J.B. |